# EUROPÄISCHE PATENTANMELDUNG

(11) **EP 0 638 606 A1**
(43) Veröffentlichungstag der Anmeldung: **15.02.1995**
(21) Anmeldenummer: 94112309.3
(22) Anmeldetag: 06.08.1994
(51) Int. Cl.: C08J 3/07, C08L 29/14, C09D 129/14, C08G 18/56

(54) **Wässrige Emulsionen enthaltend Polyvinylbutyral**

(30) Priorität: 14.08.1993 DE 4327369
(71) Anmelder: HOECHST AKTIENGESELLSCHAFT, D-65926 Frankfurt am Main (DE)
(72) Erfinder: Schafheutle, Markus A., Dr., D-65239 Hochheim (DE); Merten, Gerhard, D-65205 Wiesbaden (DE)

(57) **Zusammenfassung**

Wäßrige Emulsionen, die Polyvinylbutyral enthalten und durch Vermischen eines nicht-ionischen Emulgators mit Polyvinylbutyral und gegebenenfalls einem Plastifizierharz und gegebenenfalls einem oder mehreren Lösungsmitteln und Zugabe von Wasser unter Einwirkung von Scherkräften hergestellt werden.

## Beschreibung

Wäßrige Emulsionen, die Polyvinylbutyral enthalten, sind bekannt. Als Emulgiermittel dienen dabei in den meisten Fällen anionische Verbindungen wie zum Beispiel Salze von Fettsäuren, Alkansulfonate oder Alkyllaurylsulfonate (US-A 2 686 724, US-A 2 532 223, US-A 2 611 755, US-A 2 509 667).

Derartige Emulsionen mit einem Gehalt an ionischen Emulgatoren sind aber empfindlich gegen Änderungen des pH-Werts, so daß sie nicht für jeden Anwendungszweck geeignet sind. Emulsionen mit nichtionischen Emulgatoren dagegen sind stabil gegenüber einer Änderung des pH-Werts.

In JP-A 58/026374 sind wäßrige Emulsionen von Polyvinylbutyral beschrieben, die frei von anionischen Emulgiermitteln sind. Diese Emulsionen enthalten neben dem Polyvinylbutyral noch Polyvinylalkohol, ein sogenanntes Plastifizierharz zur Verbesserung der filmbildenden Eigenschaften und der Elastizität sowie ein sogenanntes Petroleumharz. Die Herstellung dieser Emulsionen muß unter Druck erfolgen.

Es wurde nun gefunden, daß man solche Emulsionen, die Polyvinylbutyral enthalten, auch ohne Anwendung von Druck und dementsprechend nach einem einfacheren Verfahren herstellen kann.

Gegenstand der Erfindung sind wäßrige Emulsionen, die Polvinylbutyral enthalten und durch Vermischen eines nicht-ionischen Emulgators mit Polyvinylbutyral und gegebenenfalls einem Plastifizierharz und gegebenenfalls einem oder mehreren Lösemitteln und Zugabe von Wasser unter Einwirkung von Scherkräften hergestellt werden.

Als Emulgatoren dienen übliche nicht-ionische Emulgatoren wie beispielsweise Polyvinylalkohol mit einem Verseifungsgrad von vorzugsweise 50 bis 98 %, ethoxylierte Fettalkohole oder Alkylphenole, vorzugsweise mit einem Gehalt an Ethylenoxid von 10 bis 50 Einheiten Ethylenoxid. Bevorzugt als Emulgatoren sind die in EP 272 595 beschriebenen Kondensationsprodukte aus einem aliphatischen Polyol und einer Polyepoxidverbindung, wobei das Epoxidäquivalentgewicht (Molmasse dividiert durch die Anzahl der Epoxidgruppen) dieser Kondensationsprodukte zwischen 200 und 150000, vorzugsweise bei 400 bis 100000 g/mol liegt.

Bei den aliphatischen Polyolen zur Herstellung dieser Emulgatoren handelt es sich vorzugsweise um Polyetherpolyole (Polyalkylenglykole) mit gewichtsmittleren Molmassen (M_{w}; Gelpermeationschromatographie; Polystyrolstandard) von bevorzugt 600 bis 120000, insbesondere 2000 bis 8000 g/mol und OH-Zahlen zweckmäßigerweise von 10 bis 200, bevorzugt 15 bis 60 mg KOH/g. Diese Polyetherpolyole besitzen vorzugsweise nur endständige, primäre OH-Gruppen. Beispielsweise seien hier Blockcopolymere aus Ethylenoxid und Propylenoxid sowie Polyethylen-, Polypropylen-, Polybutylenglykole genannt, wobei auch Gemische der jeweiligen Polyalkylenglykole eingesetzt werden können. Vorzugsweise werden Polyethylenglykole verwendet.

Bei den Polyepoxidverbindungen handelt es sich vorzugsweise um Polyglycidylether auf Basis von mehrwertigen, vorzugsweise zweiwertigen Alkoholen, Phenolen, Hydrierungsprodukten dieser Phenole und/oder Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 500, insbesondere zwischen 170 und 250 g/mol. Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-äthan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl-)ether, Bis-(4-hydroxyphenyl-)sulfon u.a. sowie die Chlorierungs- und Bromierungsprodukte der vorstehend genannten Verbindungen, wie z.B. Tetrabrombisphenol A. Bisphenol A ist hierbei besonders bevorzugt.

Zur Verbesserung der filmbildenden Eigenschaften und der Flexibilität können die erfindungsgemäßen Emulsionen vorteilhafterweise noch sogenannte Plastifizierungsharze üblicher Art, beispielsweise Phenolharze, Epoxidharze, Novolake und Dialkylphthalate enthalten. Als Plastifizierungsharze sind die Umsetzungsprodukte aus Bisphenol A-diglycidylether, Bisphenol A und Phenol bevorzugt, wie sie in EP-A 152 793 beschrieben sind.

Die beanspruchten Emulsionen können auch Lösemittel enthalten wie beispielsweise Solvesso® 100 (Mischung unterschiedlich substituierter Aromaten), Toluol, Xylol, Benzin, Alkohole wie Butanol, Butylglykol, Methoxypropanol, Arcosolv®, tert.-Butoxypropanol.

Als Polyvinylbutyral für die beanspruchten Emulsionen kommen alle üblichen und bekannten Typen von Polyvinylbutyral in Frage. Übliche Polyvinylbutyral-Typen haben beispielsweise folgende Kenndaten: Viskosität einer 6 %igen Lösung in Methanol bei 20°C:1 bis 200 mPa s; Acetalisierungsgrad 65 bis 90 % (berechnet als Polyvinylacetat); Acetatgehalt 2-5% (berechnet als Polyvinylacetat); Gehalt an OH-Gruppen 15 bis 30 % (berechnet als Polyvinylalkohol).

Die jeweiligen Komponenten liegen in der Emulsion vorzugsweise in folgenden Massenanteilen vor: Polyvinylbutyral 10 bis 99, insbesondere 30 bis 70 %, Plastifizierharz 0 bis 90, insbesondere 30 bis 70 %, Lösemittel 0 bis 50, insbesondere 0 bis 20 % und Emulgator 1 bis 20, insbesondere 1 bis 10 %. Alle Massengehalte sind bezogen auf die Gesamtmasse an Feststoff in der Emulsion und sollten in der Summe 100 % ergeben.

Zur Herstellung der Emulsion werden zunächst der Emulgator, sowie gegebenenfalls das Plastifizierharz und das Lösemittel auf ca. 60 bis 100 °C erwärmt und vermischt. Dann wird das Polyvinylbutyral zugegeben und bei Temperaturen von ca. 50 bis 150 °C dem Emulgator oder dessen Mischung mit dem Plastifizierharz gelöst. Anschließend wird die Lösung auf unter 100 °C gekühlt und Wasser zudosiert. Während der Zugabe des Wassers wird weiter unter 75 °C gekühlt. Wenn die Emulsion einen Festkörpergehalt von ca. 60 bis 70 % erreicht hat, wird die Zugabe von Wasser gestoppt, die Emulsion wird aber ca. eine Stunde intensiv weitergerührt, wobei durch Kühlen die Temperatur der Emulsion unter 70 °C gehalten wird. Abschließend wird weiter auf die gewünschte Endkonzentration (ca. 20 bis 60 %) verdünnt. Der Emulgierprozeß erfolgt mit üblichen Apparaturen, die eine ausreichende Scherwirkung leisten. Beispielsweise können Kessel mit entsprechendem Rührer, ein Rotor-Stator-Dispermat oder Ultra-Turrax, verwendet werden. Diese letzteren Apparaturen haben den Vorteil, daß der anfängliche Mischvorgang nicht im Emulgierkessel erfolgt und dadurch eine höhere Kesselausbeute gewährleistet ist.

Bei Lackierungen mit fremdemulgierten Harzen können gelegentlich durch das Aufschwimmen des Emulgators auf die Oberfläche des Lackfilms Probleme entstehen. Im vorliegenden Fall können solche Probleme durch Di- oder Polyisocyanate behoben werden, die mit der Emulsion reagieren. Diese Modifizierung der Emulsion kann sowohl nach der sogenannten Ein-Komponenten Methode als auch nach der Zwei-Komponenten Methode erfolgen. Im ersten Fall läßt man die Emulsion bei ca. 60 °C mit geeigneten Isocyanaten reagieren, vorzugsweise aliphatischen Diisocyanaten wie Isophorondiisocyanat, 2,2-Bis-(4'-isocyanatocyclohexyl)-propan, m-Tetramethylxylylendiisocyanat, Isocyanurat des Hexamethylendiisocyanats oder polyfunktionellen Allophanaten oder Biureten. Durch die Reaktion mit solchen Isocyanaten bildet sich über Urethan- und Harnstoffbrükken eine mikrogelähnliche Struktur.

Es ist auch möglich, die Polyisocyanate vor der Emulgierung der Polymerlösung zuzugeben und abreagieren zu lassen. Diese teilvernetzte Lösung wird dann nach dem oben beschriebenen Verfahren mit Wasser emulgiert. Diese Variante bietet den Vorteil, neben aliphatischen auch aromatische Polyisocyanate einsetzen zu können.

Bei der dritten Variante gibt man das Isocyanat erst unmittelbar vor der Weiterverarbeitung zu.

Ebenfalls kann zur Vermeidung des Aufschwimmens des Emulgators die Emulgator-Harz-Schmelze mit Polysäuren modifiziert werden. Typische Säuren für diesen Zweck sind beispielsweise Adipinsäure, Isophthalsäure, Terephthalsäure, Trimellitsäure und die Anhydride dieser Säuren. Wird die Modifikation mit diesen Säuren so durchgeführt, daß noch ein restlicher Säuregehalt bestehen bleibt, wird damit auch eine bessere Pigmentverträglichkeit und Scherstabilität der Polyvinylbutyralemulsion erreicht.

Filme auf der Grundlage der so modifizierten Emulsionen zeigen eine hervorragende Härte, Wasserbeständigkeit und Korrosionsschutzwirkung sowie eine gute Haftung auf Metall und Kunststoff. Da mit diesen Emulsionen gefertigte Grundierungen eine gute Zwischenschichthaftung zeigen, erreicht man auch eine gute Überlackierbarkeit.

Die erfindungsgemäßen Emulsionen, sei es in der nicht-modifizierten Art oder in der beschriebenen, mit Polyisocyanaten oder Polysäuren modifizierten Art, werden als Bindemittel für Washprimer, Industrielacke, temperaturbeständige Lacke wie z.B. Heizkörperlacke, Emballagenlacke, Haftgrundierungen, Schweißprimer, Parkettlacke, Straßenmarkierungsfarben, Klebstoffe und Co-bindemittel in Klebstofformulierungen eingesetzt.

### Beispiele

### 1. Emulsion mit aprotischem Lösungsmittel

30 g Emulgator bestehend aus Bisphenol-A-diglycidylether und Polyethylenglykol-4000 gemäß EP 272 595 ("Emulgator 1"), 300 g Plastifizierharz, bestehend aus Bisphenol-A-diglycidylether, Phenol und Bisphenol-A gemäß EP-A 152 793 (®Beckopox EM 460 lösemittelfrei), und 171 g ®Solvesso-100 werden bei steigender Temperatur (von 60°C bis 100°C) ineinander gelöst. Danach wird das Polyvinylbutyral (®Mowital B20H) zu dieser Lösung gegeben und bei Temperaturen bis 130 °C homogen gelöst. Die Lösung wird auf 90 °C gekühlt und mit 180 g entionisiertem Wasser bei bis 60 °C fallender Temperatur mit einer Umfangsgeschwindigkeit von 6,3 m/s emulgiert. Unter diesen Bedingungen wird eine Stunde gerührt. Zu dieser Präemulsion wird mit 280 g entionisiertem Wasser auf die Endkonzentration verdünnt. Man erhält eine Emulsion mit einem Feststoffgehalt von 50,6 %, einer Viskosität bei 23 °C von 2100 mPa.s und einem pH-Wert von 6,5.

### 2. Emulsion mit einer Mischung aus protischem und aprotischem Lösungsmittel

30 g Emulgator 1,300 g ®Beckopox EM 460 lösemittelfrei, 12,6 g Butylglykol und 157,4 g ®Solvesso-100 werden wie unter 1. in der Wärme ineinander gelöst. Zu dieser Lösung wird 300 g ®Mowital B30HH gegeben und bei Temperaturen bis 130 °C darin gelöst. Nach Emulgierung entsprechend den Bedingungen wie unter 1. beschrieben erhält man eine Emulsion mit einem Feststoffgehalt von 50 %, einer Viskosität bei 23 °C von 429 mPa.s und einem pH-Wert von 6,5.

### 3. Emulsion, die nach der Emulgierung mit Polyisocyanaten modifiziert wurde

Zu der Emulsion bestehend aus 30 g Emulgator 1, 300 g ®Beckopox EM 460 lösemittelfrei, 171 g ®Solvesso-100, 300 g ®Mowital B30HH und 465,3 g entionisiertem Wasser, die nach Vorschrift 1. gefertigt wurde, wird bei 60 °C 6,3 g Isophorondiisocyanat zugetropft und so lange miteinander verrührt, bis alles Isocyanat abreagiert ist. Man erhält eine Emulsion mit einem Feststoffgehalt von 51,9 %, einer Viskosität bei 23 °C von 1130 mPa.s und einem pH-Wert von 6,5.

### 4. Emulsion, die vor der Emulgierung mit Polyisocyanaten modifiziert wurde

Es wird eine Lösung nach Verfahren 1. hergestellt, die aus 30 g Emulgator 1, 300 g ®Beckopox EM 460 lösemittelfrei, 171 g ®Solvesso-100 und 300 g ®Mowital B30HH besteht. Diese Lösung wird mit 6,3 g Isophorondiisocyanat bei 90 °C zum Urethan umgesetzt, bis kein Isocyanat mehr nachweisbar ist. Danach wird diese Lösung mit 465,3 g entionisiertem Wasser nach dem Verfahren 1. emulgiert. Es entsteht eine Emulsion mit einem Feststoffgehalt von 51,6 %, einer Viskosität bei 23 °C von 948 mPa.s und einem pH-Wert von 6,8.

### 5. Emulsion, die vor der Emulgierung mit Polysäuren modifiziert wurde

### 5a. Modifikation des Emulgators

Eine Mischung aus 100 g Emulgator 1 und 6 g Trimellitsäureanhydrid wird auf 130 °C erwärmt. Nach Zugabe von 0,02 g Dibutylzinnoxid wird bei dieser Temperatur 1 Stunde gehalten, danach wird abgekühlt. Das Produkt hat eine Säurezahl von 33 mg KOH/g.

### 5b. Modifikation der Polyvinylbutyralschmelze und Emulgierung

200 g ®Beckopox EM 460 und 200 g®Mowital B30HH werden bei 200 °C miteinander gemischt. In die klare Schmelze werden 20 g Emulgator nach Verfahren 5a. gegeben. Nach Zugabe von 0,1g Dibutylzinnoxid wird unter Vakuum (50 mbar) bei 200 °C so lange Wasser abdestilliert, bis die Säurezahl der Schmelze Null ist. Es werden anschließend 3,3 g Trimellitsäureanhydrid bei 120 °C zugegeben und die Temperatur ca. 1 Stunde gehalten bis die Säurezahl 4,6 mg KOH/g erreicht hat. Nach Zugabe von 110 g ®Solvesso 100 und Abkühlen auf 90 bis 100 °C wird nach Verfahren 1. emulgiert. Man erhält eine wäßrige Emulsion mit einem Feststoffgehalt von 51,1 %, einer Viskosität bei 23 °C von 702 mPa.s und einem pH-Wert von 3,2.

## Patentansprüche

1. Wäßrige Emulsionen, die Polyvinylbutyral enthalten und durch Vermischen eines nicht-ionischen Emulgators mit Polyvinylbutyral und gegebenenfalls einem Plastifizierharz und gegebenenfalls einem oder mehreren Lösungsmitteln und Zugabe von Wasser unter Einwirkung von Scherkräften hergestellt werden.

2. Wäßrige Emulsion nach Anspruch 1, dadurch gekennzeichnet, daß die in der Emulsion enthaltenen Polymeren durch Reaktion mit aliphatischen oder aromatischen Polyisocyanaten modifiziert sind.

3. Wäßrige Emulsion nach Anspruch 1, dadurch gekennzeichnet, daß die in der Emulsion enthaltenen Polymeren vor der Zugabe des Wassers mit aliphatischen oder aromatischen Polyisocyanaten modifiziert sind.

4. Wäßrige Emulsion nach Anspruch 1, dadurch gekennzeichnet, daß die in der Emulsion enthaltenen Polymeren nach der Zugabe des Wassers mit aliphatischen oder aromatischen Polyisocyanaten modifiziert sind.

5. Wäßrige Emulsion nach Anspruch 1, dadurch gekennzeichnet, daß die in der Emulsion enthaltenen Polymeren vor der Zugabe des Wassers mit Polysäuren modifiziert sind.

6. Zubereitungen für Beschichtungen, die Emulsionen nach Ansprüchen 1 bis 5 enthalten.

7. Zubereitungen für Beschichtungen nach Anspruch 6, die gemäß der 2-Komponenten-Technik kurz vor dem Aufbringen auf das Substrat mit aliphatischen oder aromatischen Polyisocyanaten versetzt worden sind.
